# EUROPEAN PATENT SPECIFICATION

(11) **EP 0 510 582 B1**
(45) Date of publication and mention of the grant of the patent: **27.12.1995**
(21) Application number: 92106797.1
(22) Date of filing: 21.04.1992
(51) Int. Cl.: B60K 6/04, B60K 17/28

(54) **Vehicle powerplant featuring thermal and electrical drive means**
Fahrzeugtriebwerk mit thermischem und elektrischem Antrieb
Mécanisme de propulsion pour véhicule avec propulsion thermique et électrique

(30) Priority: 23.04.1991 IT TO910307
(43) Date of publication of application: 28.10.1992
(73) Proprietor: IVECO FIAT S.p.A., 10156 Torino (IT)
(72) Inventor: Filippi, Federico, I-10100 Torino (IT)
(74) Representative: Plebani, Rinaldo

(56) References cited:
- DE-A- 2 510 623
- DE-A- 2 943 519
- FR-A- 2 415 022
- FR-A- 2 511 954
- GB-A- 1 495 261
- US-A- 3 888 325
- US-A- 4 319 140

## Description

The present invention relates to a vehicle powerplant comprising thermal and electrical drive means variously connectable to the input shaft of the transmission as well as to a countershaft controlling accessory devices on the vehicle.

Vehicles of the aforementioned type are employed over mixed routes allowing of little or no emission, or over which normal emission is permitted. Over the first type, the vehicle is driven solely by the electrical drive means or in controlled manner by the thermal means, whereas, over the second, the thermal drive means are operated normally. Vehicles of this type invariably feature accessory devices (e.g. hydraulic power steering pump, brake and conditioner compressors, auxiliary alternators), and at times also special-purpose devices powered by the above drive means for performing special functions for which the vehicle is designed. Both the accessory and special-purpose devices frequently demand far greater power than that required for operating the vehicle under various driving conditions.

On one known powerplant of this type, the thermal drive means comprise a combustion engine connected mechanically to the transmission input shaft by a propeller shaft fitted with a clutch designed to assume a first and second position wherein the combustion engine is respectively connected to and disconnected from the transmission input shaft.

A countershaft for powering the vehicle accessory devices is connected by a system of gears to the propeller shaft, downstream from the clutch.

The electrical drive means normally consist of a unit designed to operate as both an electric motor and current generator. The rotor element of the unit is connected to the countershaft in such a manner as to be driven by it when the unit is operated as a current generator, and to drive it for rotating the transmission input shaft when the unit is operated as a motor.

Alternatively, the rotor element of the unit is connected directly to the propeller shaft to form a single drive line between the combustion engine and the transmission input shaft, in which case, the drive line is fitted with a second clutch downstream from the unit.

The powerplant also comprises a storage battery to which current is fed by the unit when operated as a generator, and from current is drawn when the unit is operated as a motor.

Powerplants of the type briefly described above provide for two operating modes. In a first, the combustion engine is operated and the clutch (or both clutches, in the case of the alternative configuration described above) is set to the first engaged position, so that both the transmission input shaft and the countershaft are driven by the combustion engine, while the rotor element of the unit, set to generator mode, is rotated by the countershaft for charging the batteries. In the second operating mode, the clutch is set to the second release position, and the unit alone is operated as an electric motor, the rotor element of which thus provides for powering both the transmission input shaft and the countershaft.

Powerplants of the aforementioned type present numerous drawbacks.

Firstly, in the second operating mode, i.e. when operated electrically, the accessory devices are driven solely by the power supplied by the battery, which, if of normal weight and size for the vehicle, provides for accumulating only a limited amount of energy.

Secondly, in the second operating mode, wherein the combustion engine is idle and disconnected from the drive line, current can only be generated for charging the battery when braking the vehicle, and if the unit is designed to operate as a brake, for recovering the energy produced during braking and converting it at least partially into electrical energy.

As a result, the operating range of the powerplant is fairly limited.

In FR-A-2415022 is described a vehicle powerplant comprising a combustion engine connected mechanically by a first clutch to a drive line transmitting the motion to the wheels of the vehicle and an electric motor connected to said drive line by a second clutch. Said electric motor is driven by the current supplied through an overhead connection to the public power supply. A powerplant of this type can be used only in the case in which an overhead connection is available and presents some of the drawbacks before exposed.

It is an object of the present invention to provide a powerplant of the aforementioned type designed to overcome the aforementioned drawbacks.

According to the present invention, there is provided a vehicle powerplant according to the features of claim 1, comprising first thermal drive means and second electrical drive means; said first and second means being activated for transmitting motion to the drive wheels of the vehicle via a transmission; said first drive means comprising a combustion engine connected mechanically to said wheels by a drive line fitted with said transmission and with a first clutch located between said engine and said transmission and which clutch may be set to a first and second position wherein said combustion engine is respectively connected to and disconnected from said transmission;
a current generator for supplying electric current to a storage battery, and the rotor element of which is connected to said drive line upstream from said first clutch;
said electrical drive means comprising an electric motor, the rotor element of which is connected by a first drive to said drive line downstream from said first clutch, said electric motor being driven by the current supplied by said battery,
a second clutch located between the rotor element of said electric motor and said drive line, and which may be set to a first and second position wherein said rotor element of said motor is respectively connected to and disconnected from said drive line;
a shaft connected to said drive line upstream from said first clutch by a second drive, and which provides for a power takeoff for operating the accessory devices of said vehicle in addition to the generator; the rotor element of said current generator being connected to said shaft;
said current generator being also arranged and installed to be operable as an electric motor; said second drive presenting a third clutch designed to assume a first position wherein said shaft connected to said rotor element of said current generator is also connected to said drive line, and a second position wherein said shaft is disconnected from said drive line; the arrangement being such that said accessory devices can be driven by said current generator when the current generator is disconnected from said drive line.

The design and operation of the powerplant according to the present invention will be described by way of example with reference to the accompanying drawings, in which:

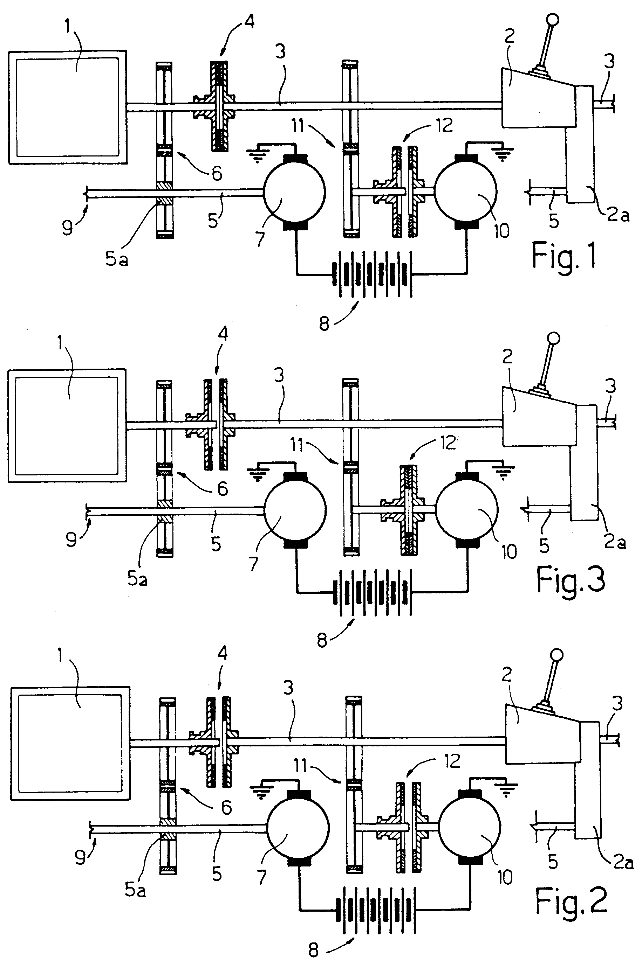

Fig.1 shows a schematic view of a first configuration of the powerplant according to the present invention;
Fig.s 2 and 3 show a further two configurations of the Fig.1 powerplant.

The powerplant according to the present invention comprises a combustion engine 1, e.g. a diesel engine; and a transmission 2, the input shaft of which is connected mechanically to engine 1 by a propeller shaft 3 fitted with a clutch, e.g. a friction clutch, 4. Clutch 4, which is operable in any manner, e.g. directly by the driver and/or by means of any type of actuator, is designed to assume two positions: an engaged position (Fig.1) wherein the up- and downstream portions of shaft 3 are connected; and a release position (Fig.s 2 and 3) wherein said portions are disconnected.

As shown clearly in the accompanying drawings, the powerplant also comprises a countershaft 5 connected mechanically to shaft 3, upstream from clutch 4, by a drive consisting, for example, of gears 6.

A current generator 7 supplies electric current to a storage battery 8, and presents a rotor element (not shown) connected to and rotated by countershaft 5.

Countershaft 5 or another shaft upstream from clutch 4 also provides for a power takeoff 9 for operating the accessory devices on the vehicle. These, in addition to standard industrial vehicle devices, such as the power steering pump, brake and conditioner compressors and auxiliary alternators, may also consist of special-purpose devices, such as compactors, in the case of refuse collection and disposal vehicles.

The powerplant according to the present invention also comprises an electric motor 10 powered by the current supplied by battery 8, and the rotor element (not shown) of which is connected to propeller shaft 3, downstream from clutch 4, by a second drive consisting, for example, of gears 11. A second clutch 12, which may be the same type as clutch 4, is located between the rotor element of motor 10 and drive 11, and is designed to assume a first engaged position (Fig.3) wherein the rotor element of motor 10 is connected to drive 11, and a second release position (Fig.s 1 and 2) wherein the rotor element and drive 11 are disconnected.

For the reasons explained later on, current generator 7 may conveniently be designed to also operate as an electric motor powered by battery 8, in which case, drive 6 is provided with a clutch 5a of any type, designed to assume a first and second position wherein shaft 5 of generator-motor 7 is respectively connected to and disconnected from drive line 3 immediately downstream from engine 1. Clutch 5a may conveniently be housed in one of the gears of drive 6, as shown schematically in the accompanying drawings.

The powerplant may also comprise a further drive 2a forming part of and possibly comprising pairs of gears housed inside transmission 2, for transmitting motion from drive line 3 to shaft 5 connected to power takeoff 9. Drive 2a is activated exclusively, in known manner, with the gear lever in neutral, so that no motion is transmitted to the wheels of the vehicle.

According to a variation not shown, drive 11 may be driven from a point on drive line 3 downstream from transmission 2, as opposed to upstream as shown in the accompanying drawings, for reducing the size, particularly lengthwise, of the powerplant and so enabling troublefree installation on certain types of vehicle.

The powerplant according to the present invention operates as follows.

In a first operating mode (Fig.1), combustion engine 1 is operated with clutch 4 in the first (engaged) position and clutch 12 in the second (release) position, so that the vehicle is driven by engine 1 connected by shaft 3 to the input shaft of transmission 2. In this mode, clutch 4 is operated normally for shifting transmission 2.

At the same time, drive 6 rotates countershaft 5, which in turn rotates the rotor element of current generator 7 for charging battery 8, and operates the accessory devices on the vehicle connected to power takeoff 9.

This first operating mode therefore provides, thermally, for running the vehicle normally, operating the accessory devices, and charging the battery, and may conveniently be employed over routes involving no particular control of emission.

In a second operating mode, combustion engine 1 is again operated, but with clutch 4 in the second (release) position (Fig.2), so that only countershaft 5 and consequently generator 7 and the auxiliary devices are operated thermally. In this mode, means for controlling the speed and fuel supply of engine 1 may be provided for minimizing emission, thus enabling temporary stoppage of the vehicle for operating the accessory devices and/or charging battery 8.

In a third operating mode (Fig.3), combustion engine 1 is again operated, but with clutch 4 in the second (release) position, clutch 12 in the first (engaged) position, and electric motor 10 activated, so that shaft 3 is disconnected from engine 1 and drive 6, the input shaft of transmission 2 is powered by motor 10 via drive 11, and the vehicle is driven entirely electrically by the power drawn from battery 8. If combustion engine 1 is activated, current generator 7 is also operated simultaneously for charging battery 8, which thus acts as a flywheel for the power supplied by engine 1 and drawn off by electric motor 10.

In this third mode, operation of engine 1 is so controlled as to maintain substantially constant engine speed and output combined with a high degree of efficiency and minimum emission for driving along controlled-emission routes.

An important point to note is that, in all three configurations described, the accessory devices are operated thermally, that is, under high power conditions, with no limitation in terms of autonomy.

Nevertheless, when drive 11 is driven from a point along line 3 upstream from transmission 2, if the power required in said third mode for operating the accessory devices is not such as to limit autonomy, and/or peak power is demanded of takeoff 9 in excess of the average designed for effectively controlling combustion engine 1 (for achieving high efficiency and minimum emission), power takeoff 9 (and, hence, shaft 5) may be controlled by drive 2a transmitting motion from transmission 2 to shaft 5 and so electrically controlling power takeoff 9.

When absolutely no emission is permitted, a fourth operating mode may be employed, which consists in de-activating engine 1 and operating the powerplant as described with reference to Fig.3, in which case, the vehicle is operated entirely electrically by battery 8.

In fourth mode (with engine 1 de-activated), power takeoff 9 may still be controlled electrically, as required for at least operating the accessory devices governing the driveability of the vehicle, such as the power steering pump and brake system devices.

For this purpose, clutch 5a is released and generator 7 set to motor mode and supplied by battery 8 for electrically powering takeoff 9.

When electrically operating the vehicle (third and fourth mode), transmission 2 can only be operated normally by means of clutch 12 if drive 11 is located upstream from the transmission. Moreover, if also designed to function as a current generator, electric motor 10 may provide for electrically braking the vehicle and at least partially recovering and converting the energy produced when braking into electrical energy, which is stored in battery 8.

To those skilled in the art it will be clear that changes may be made to the powerplant as described and illustrated herein without, however, departing from the scope of the present invention.

The above further embodiment of the powerplant obviously operates in exactly the same way as described with reference to the accompanying drawings.

## Claims

1. A vehicle powerplant comprising:
- first thermal drive means and second electrical drive means; said first and second means being activated for transmitting motion to the drive wheels of the vehicle via a transmission (2); said first drive means comprising a combustion engine (1) connected mechanically to said wheels by a drive line (3) fitted with said transmission (2) and with a first clutch (4) located between said engine (1) and said transmission (2) and which clutch may be set to a first and second position wherein said combustion engine (1) is respectively connected to and disconnected from said transmission (2);
- a current generator (7) for supplying electric current to a storage battery (8),
said electrical drive means comprising an electric motor (10), the rotor element of which is connected by a first drive (11) to said drive line (3) downstream from said first clutch (4),
- a second clutch (12) located between the rotor element of said electric motor (10) and said drive line (3), and which may be set to a first and second position wherein said rotor element of said motor (10) is respectively connected to and disconnected from said drive line (3); characterized in that
the rotor element of said current generator is connected to said drive line (3) upstream from said first clutch (4); said electric motor (10) is driven by the current supplied by said battery (8); and
a shaft (5) connected to said drive line (3) upstream from said first clutch (4) by a second drive (6), and which provides for a power takeoff (9) for operating the accessory devices of said vehicle in addition to the generator; the rotor element of said current generator (7) being connected to said shaft (5);
said current generator (7) being also arranged and installed to be operable as an electric motor; said second drive (6) presenting a third clutch (5a) designed to assume a first position wherein said shaft (5) connected to said rotor element of said current generator (7) is also connected to said drive line (3), and a second position wherein said shaft (5) is disconnected from said drive line (3); the arrangement being such that said accessory devices can be driven by said current generator when the current generator is disconnected from said drive line.

2. A powerplant as claimed in one of the foregoing Claims, characterized by the fact that said first (11) and second (6) drives are gear drives.

3. A powerplant as claimed in one of the foregoing Claims, characterized by the fact that said first drive (11) is connected to said drive line (3) upstream from said transmission (2).

4. A powerplant as claimed in one of the foregoing Claims from 1 to 3, characterized by the fact that said first drive (11) is connected to said drive line (3) downstream from said transmission (2).

5. A powerplant as claimed in one of the foregoing Claims, characterized by the fact that said second clutch (12) is located between said rotor element of said electric motor (10) and said first gear drive (11).

6. A powerplant as claimed in one of the foregoing Claims, characterized by the fact that it comprises a third drive (2a) for connecting said transmission (2) to said shaft (5) providing for said power takeoff (9).

7. A powerplant as claimed in one of the foregoing Claims, characterized by the fact that said electric motor (10) is also designed to operate as a current generator, for electrically braking said vehicle and generating electric current which is supplied to said battery (8).

## Patentansprüche

1. Fahrzeugantrieb der folgendes aufweist:
- eine erste thermische Antriebseinrichtung und eine zweite elektrische Antriebseinrichtung; wobei die erste und die zweite Einrichtung zum Übertragen von Bewegung zu den Aritriebsrädern des Fahrzeuges über ein Getriebe (2) aktiviert werden; wobei die erste Einrichtung einen Verbrennungsmotor (1) aufweist, der mechanisch mit den Rädern durch eine Transmission (3) verbunden ist, die mit dem Getriebe (2) und mit einer ersten Kupplung (4) eingerichtet ist, die zwischen dem Motor (1) und dem Getriebe (2) angeordnet ist, und wobei die Kupplung in eine erste und eine zweite Stellung gebracht werden kann, in welcher der Verbrennungsmotor (1) jeweils mit dem Getriebe (2) verbunden und von diesem getrennt wird;
- einen Stromgenerator (7) zur elektrischen Stromversorgung einer Speicherbatterie (8), wobei die elektrische Antriebseinrichtung einen Elektromotor (10) aufweist, dessen Rotorelement durch einen ersten Antrieb (11) mit der Transmission (3) stromabwärts von der ersten Kupplung (4) verbunden ist, und
- eine zweite Kupplung (12), die zwischen dem Rotorelement des Elektromotors (10) und der Transmission (3) angeordnet ist und welche in eine erste und eine zweite Stellung gebracht werden kann, wobei das Rotorelement des Motors (10) jeweils mit der Transmission (3) verbunden oder von dieser getrennt wird;
dadurch **gekennzeichnet,** daß
- das Rotorelemet des Stromgenerators mit der Transmission (3) stromaufwärts von der ersten Kupplung (4) verbunden ist;
- der Elektromotor (10) von dem von der Batterie (8) zur Verfügung gestellten Strom angetrieben wird;
- eine Welle (5), die mit der Transmission (3) stromaufwärts von der ersten Kupplung (4) durch einen zweiten Antrieb (6) verbunden ist, und die für einen Antrieb (9) zum Betreiben der Nebeneinrichtung des Fahrzeuges zusätzlich zum Generator vorgesehen ist; wobei das Rotorelement des Stromgenerators (7) mit der Welle (5) verbunden ist; wobei der Stromgenerator (7) auch als ein Elektromotor betreibbar angeordnet und installiert ist; wobei der zweite Antrieb (6) eine dritte Kupplung (5a) aufweist, die so konstruiert ist, eine erste Position einzunehmen, bei der die Welle (5), die mit dem Rotorelement des Stromgenerators (7) verbunden ist, auch mit der Transmission (3) verbunden ist und eine zweite Stellung, bei der die Welle (5) von der Transmission (3) entkoppelt ist; wobei die Anordnung derart ist, daß die Nebeneinrichtungen von dem Stromgenerator angetrieben werden können, wenn der Stromgenerator von der Transmission entkoppelt ist.

2. Antrieb nach einem der vorhergehenden Ansprüche gekennzeichnet durch die Tatsache, daß die Erst-(11) und Zweit(12) -antriebe Getriebe-Antriebe sind.

3. Triebwerk nach einem der vorhergehenden Ansprüche, gekennzeichnet durch die Tatsache, daß der erste Antrieb (11) mit der Transmission (3) stromaufwärts von dem Getriebe (2) verbunden ist.

4. Triebwerk nach einem der vorhergehenden Ansprüche 1-3, gekennzeichnet durch die Tatsache, daß der erste Antrieb (11) mit der Transmission (3) stromabwärts von dem Getriebe (2) verbunden ist.

5. Triebwerk nach einem der vorangehenden Ansprüche gekennzeichnet durch die Tatsache, daß die zweite Kupplung (12) zwischen dem Rotorelement des Elektromotors (10) und dem ersten Getriebeantrieb (11) angeordnet ist.

6. Triebwerk nach einem der vorhergehenden Ansprüche gekennzeichnet durch die Tatsache, daß es einen dritten Antrieb (2a) zur Verbindung des Getriebes (2) mit der Welle (5), die den Antrieb (9) bereitstellt, umfaßt.

7. Triebwerk nach einem der vorhergehenden Ansprüche gekennzeichnet durch die Tatsache, daß der Elektromotor (10) auch so ausgelegt ist, daß er als ein Stromgenerator zum elektrischen Bremsen des Fahrzeuges und zum Erzeugen elektrischen Stromes, welcher der Batterie (8) zur Verfügung gestellt wird, arbeitet.

## Revendications

1. Système de propulsion pour véhicule comprenant:
- des premiers moyens thermiques d'entraînement et des deuxièmes moyens d'entraînement électriques; ces premiers et seconds moyens étant actionnés pour transmettre un mouvement aux roues motrices du véhicule par l'intermédiaire d'une boîte de vitesses (2); les premiers moyens d'entraînement comprenant un moteur à combustion (1) relié mécaniquement à ces roues par une ligne de transmission (3) équipée de ladite boîte de vitesses (2) et d'un premier embrayage (4) placé entre le moteur (1) et la boîte de vitesses (2), lequel embrayage peut être mis dans une première ou une seconde position dans laquelle le moteur à combustion (1) est respectivement relié à la boîte de vitesses (2) ou débrayé de celle-ci ;
- une génératrice de courant (7) pour fournir du courant électrique à une batterie d'accumulateurs (8),
les moyens électriques d'entraînement comprenant un moteur électrique (10), dont le rotor est connecté par une première boîte de transmission (11) à la ligne de transmision (3) en aval du premier embrayage (4) et
- un second embrayage (12) placé entre le rotor du moteur électrique (10) et la ligne de transmission (3) et qui peut être mis dans une première et une seconde position dans lesquelles le rotor du moteur (10) est respectivement relié à la ligne de transmission (3) ou débrayé de celle-ci ;
système de propulsion de véhicule caractérisé en ce que le rotor de la génératrice de courant est relié à la ligne de transmission (3) en amont du premier embrayage (4); le moteur électrique (10) est entraîné par le courant fourni par la batterie (8) et l'on prévoit un arbre (5) relié à la ligne de transmission (3) en amont du premier embrayage (4) par une seconde boîte de transmission (6) et qui comprend une prise de force (9) pour faire fonctionner les appareils accessoires du véhicule en plus de la génératrice; le rotor de la génératrice de courant (7) étant relié à l'arbre (5); la génératrice de courant (7) étant également agencée et installée de manière à pouvoir fonctionner en moteur électrique; la seconde boîte de transmission (6) présentant un troisième embrayage (5a) conçu pour prendre une première position dans laquelle l'arbre (5), relié au rotor de la génératrice de courant (7), est également relié à la ligne de transmision (3) et une seconde position dans laquelle l'arbre (5) est débrayé de la ligne de transmission (3); la disposition étant telle que les appareils accessoires puissent être entraînés par la génératrice de courant quand elle est débrayée de la ligne de transmission.

2. Système de propulsion tel que revendiqué dans la revendication 1, caractérisé par le fait que la première boîte de transmission (11) et la seconde boîte de transmission (6) sont des boîtes à engrenages.

3. Système de propulsion selon l'une des revendications précédentes, caractérisé par le fait que la première boîte de transmission (11) est reliée à la ligne de transmission (3) en amont de la boîte de vitesses (2)

4. Système de propulsion selon l'une des revendications précédentes, caractérisé par le fait que la première boîte de transmission (11) est reliée à la ligne de transmission (3) en aval de la boîte de vitesses (2)

5. Système de propulsion selon l'une des revendications précédentes, caractérisé par le fait que le second embrayage (12) est placé entre le rotor du moteur électrique (10) et la première boîte de transmission à engrenages (11).

6. Système de propulsion selon l'une des revendications précédentes, caractérisé par le fait qu'il comprend une troisième boîte de transmission (2a) servant à relier la boîte de vitesses (2) à l'arbre (5) prévu pour actionner la prise de force (9).

7. Système de propulsion selon l'une des revendications précédentes, caractérisé par le fait que le moteur électrique (10) est également conçu pour fonctionner en génératrice de courant, pour freiner électriquement le véhicule et produire du courant électrique qui est fourni à la batterie (8).
